# EUROPEAN PATENT APPLICATION

(11) **EP 4 574 328 A1**
(43) Date of publication of application: **25.06.2025**
(21) Application number: 23219779.8
(22) Date of filing: 22.12.2023
(51) Int. Cl.: B23K 26/38, B23K 26/70, B23K 37/04, G01N 21/95, B23K 101/18

(54) **CLEANING A SUPPORT GRID OF A THERMAL CUTTING MACHINE**

(71) Applicant: Bystronic Laser AG, 3362 Niederönz (CH)
(72) Inventor: RÜTTIMANN, Christoph, 3012 Bern (CH); IMBODEN, Ernest, 4556 Steinhof (CH); BERGER, Michael, 3005 Bern (CH)
(74) Representative: Frei Patent Attorneys

(57) **Abstract**

The present disclosure concerns a method for the purpose of the cleaning of a support grid (200, 220) of a thermal cutting machine (1). According to the method, cutting plans are used to determine a position dependent degree of contamination, wherein the cutting plans are cutting plans representing a layout of cuts produced in the course of cutting operations carried out by the thermal cutting machine and stored in a memory of the thermal cutting machine. In the step of using cutting plans to determine the position dependent degree of contamination, the degree of contamination per position on the support grid is calculated based on the cutting operations that took place at the respective position. Dependent on a predetermined criterion, a to-be-cleaned region of the support grid is defined based on the position dependent degree of contamination.

## Description

The invention is in the field of thermal cutting machines, in particular laser cutting machines. In particular, it relates to a method of cleaning a support grid of a thermal cutting machine, to an installation for carrying out the method, to a thermal cutting system comprising such installation, as well as to a computer program product for carrying out the medium and a data carrier with this computer program product.

Thermal cutting machines, such as laser cutting machines, often have a grid - sometimes called 'support grid' - for supporting the workpiece to be cut. In flatbed thermal cutting machines, the support grid serves as a working table for a workpiece being a generally flat sheet material. A support grid may for example comprise a plurality of vertically arranged plates having support protrusions that protrude upwardly, form a grid, and define the support spots. Alternatively, the grid may be a for example rectangular or honeycomb shaped grating.

Support grids need to be cleaned regularly, since molten material from the cut as well as residual parts may stick to the support grid so that after some time the support grid's shape becomes undefined. Due to the growth of the elements forming the support grid (such as the grid elements) by such sticking, this is a self-enhancing effect, i.e. with time the tendency of material sticking to the support will enhance.

The contamination by sticking material and residual parts complicates removal of the cut parts after the cutting process and interferes with subsequent automated feeding of new workpieces which, when lying on sticking remaining rest pieces, will be supported in an uneven manner, leading to inaccurateness or even damages in subsequent cutting stages. For all these reasons, the contamination necessitates cleaning steps between subsequent cutting processes and in addition a frequent replacement of the grid.

Cleaning of the support grid can be done manually or automatically with special tools. In general, the cleaning process is noisy, time consuming and difficult to perform by the operators. In most cases, the contamination is not evenly distributed over the whole support grid. Especially, the front part of the working table (when looking towards the cutting machine) may have a tendency for being contaminated more intensely than the back part, since the front part is often used more intensively. Also, central positions may have a higher tendency to be contaminated than peripheral positions. Especially - but not only - in situations with automatic cleaning of the support grid, it would be beneficial if the positions of stronger contamination were known so that the cleaning process can focus on these, to save time and resources and minimize the noise.

For this purpose, WO 2021/215429 A1 discloses a skid state determination device for determining the state of a plurality of skids that support a workpiece, which is to be processed by a laser processing machine, via a support surface formed by the top points of a plurality of protrusions. Said skid state determination device comprises an imaging means that is capable of imaging at least a part of a skid table, to which the plurality of skids are provided, and a state determination means that determines the state of the skids on the basis of image information obtained by the imaging means by imaging the skid table. The state determination means carries out: first determination processing for determining the state of the skids on the basis of the image information obtained by the imaging means by imaging the skid table before the workpiece is brought to the skid table; and second determination processing for determining the state of the skids on the basis of the image information obtained by the imaging means by imaging the skid table after the workpiece has been brought out from the laser processing machine but before a product obtained by processing the workpiece is brought out from the skid table.

This approach of WO 2021/215429 A1, therefore deals with the above-mentioned problem. However, it requires additional hardware and has its limits where the limits of image processing are, especially in an environment where not only the contaminated support grid but also other elements of the thermal cutting machine and its environment are metallic.

It is therefore an object of the present invention to provide a method of overcoming drawbacks of prior art methods, which method should especially raise efficiency and should be straightforward to implement using known means. It is a further object to provide an installation as well as a computer program for implementing the method.

According to an aspect of the invention, a method for the purpose of the cleaning of a support grid of a thermal cutting machine is provided, the method comprising the steps of:
- Using cutting plans to determine a position dependent degree of contamination, wherein the cutting plans are cutting plans representing a layout of cuts produced in the course of cutting operations carried out by the thermal cutting machine and stored in a memory of the thermal cutting machine;
- wherein in the step of using cutting plans to determine the position dependent degree of contamination, the degree of contamination per position on the support grid is calculated based on the cutting operations that took place at the respective position;
- dependent on a predetermined criterion, defining a to-be-cleaned region of the support grid based on the position dependent degree of contamination.

The method that is for the purpose of the cleaning of a support grid may be a cleaning process preparation method, wherein the result is information that a cleaning process is now necessary and/or information on the to-be-cleaned region and possibly also on the intensity required for a cleaning process. The preparation method may in addition produce a path for a cleaning tool of an automatic grid cleaner and for example control commands for the automatic grid cleaner that, when running on a grid cleaner control, cause the cleaning tool to move along the path. A separate automatic grid cleaner - or also an operator - may then use the information, and if applicable the commands, for a subsequent cleaning step.

The cleaning tool may be a brush, such as a rotating brush, or a bracket, or any other suitable cleaning tool that can especially be subject to a movement, for example rotating and/or translatory, relative to the support grid.

As an alternative to being a preparation method, the method may be a cleaning method by further comprising the step of:
- carrying out a cleaning process, the cleaning process being carried out only in the to-be-cleaned region or being carried out more intensively in the to-be-cleaned region than in other regions.

According to the approach of the invention, the cleaning process is not carried out homogeneously for the entire support grid once the system or its operator deems a cleaning to be necessary. Rather, it is carried out selectively, only in the to-be-cleaned region or more intensively in the to-be-cleaned region than elsewhere, i.e., the position dependent contamination information, which is gained from cutting plans, is used for optimization: by discerning between the to-be-cleaned region on the one hand and regions different therefrom on the other hand the method makes the cleaning process more efficient. By the process focusing on the to-be-cleaned region, time and resources can be saved.

The to-be cleaned region may be contiguous, or it may comprise several separate subregions.

Thermal cutting machines use cutting plans to control the cutting process: a cutting plan contains the path of the cutting tool relative to the workpiece and may contain further information, such as piercing locations, cutting speed, intensity etc. For example in flatbed laser cutting machine, a laser cutting head emitting a laser beam vertically, usually downwardly, moves in the two horizontal dimensions relative to the workpiece resting on the support grid. The cutting plan determines the path the laser cutting head makes while the laser beam is emitted. The cutting plans, thus, at least during the cutting operation, are available for the thermal cutting machines anyway. The approach described in the present text, therefore, does not need any substantial resources in addition to resources present in state-of-the-art thermal cutting machines.

The position dependent degree of contamination may for example be represented as a slag intensity value s(x,y), with x and y being coordinates representing the position in the grid plane, for example (but not necessarily) cartesian coordinates. Such slag intensity value may for example be obtained by summing up cutting plan slag intensity values. The cutting plan slag intensity value especially may be obtained from giving the position at which a cut is made as well as its neighborhood a value different from zero. For example, when the cutting plan can be represented in the form c(x,y), where for example c=1 in a position where a cut is made and c=0 where no cut is made, then the cutting plan slag intensity value i(x,y) may, according to an option, be obtained by i(x,y)=c*d where d is a distribution function, for example the Gaussian function, and * denotes the convolution operation. In this, the parameters of the Gaussian function may especially depend on the material thickness of the workpiece material (for example, the maximum value being the higher the higher the thickness), properties of the laser beam (beam thickness; intensity), properties of the cut material itself, of the used cutting technique (for example fusion cutting vs. oxygen cutting), etc. According to another example, especially if the cutting plan is available in vector form, the cutting plan slag intensity value may be different from zero in a strip extending on both sides of the cut, with the value being constant within the strip or falling off as a function of the distance from the cut. Also in this case, the properties of the strip (absolute value within the strip, width of the strip, falling-off properties etc.) may depend on the workpiece, laser beam and cutting technology properties, as mentioned hereinbefore. In addition, the cutting plan slag intensity value may be different from zero in a neighborhood of a piercing location.

More in general, the contribution of one cutting plan to the degree of contamination may depend on the course of the cut(s) made, the piercings made, the properties of the beam (laser beam, plasma jet, etc.), the properties (thickness, material, etc.) of the workpiece and/or possibly other parameters.

The predetermined criterion that needs to be fulfilled for a to-be cleaned region to be defined (and thus for a cleaning process to take place) may for example comprise a comparison of the degree of contamination with a threshold value. For example, a prerequisite for the cleaning process to take place (and for the to-be-cleaned region to be defined) may be that the degree of contamination exceeds a threshold value in at least one position, that the degree of contamination exceeds a threshold value in a certain minimum area, that an average degree of contamination in a certain minimum area exceeds a threshold value, and/or that an area, where the degree of contamination exceeds a contamination threshold, exceeds an area threshold (i.e., a minimum area needs to be 'sufficiently' contaminated), etc.. These criteria or a subset thereof may be applied in a cumulated manner, for example, the predetermined criterion may be that at least one of these criteria is fulfilled. It is also possible to apply these criteria in a weighed manner, where the ultimate predetermined criterion is that a weighed sum of the respective quantities exceeds an overall threshold, etc.

When the predetermined criterion is fulfilled, the system may indicate this to an operator also indicating that an automatic - or manual - cleaning process is recommended. The operator in embodiments may then initiate an automatic (or manual) cleaning process or decide to do so at a later time. Alternatively, the system itself may determine - for example based on a queue and/or set requirements about subsequent to-be-carried-out cutting operations - whether or not there is time for a cleaning process. The decision logic deciding whether a cleaning operation is immediately carried out or not may weigh the importance of a cleaning process based on criteria such as the (increasing) size of an area with a contamination above a threshold, an (increasing) maximum slag intensity value, etc.

The cleaning process may in embodiments be carried out by an automatic grid cleaner. Such automatic grid cleaner may belong to the thermal cutting system that also comprises the thermal cutting machine, for example, the automatic grid cleaner may be coupled to the thermal cutting machine. A grid cleaner control may be capable of communicating with a machine control of the thermal cutting machine so that the cutting plans - or information derived therefrom for example the position dependent degree of contamination if the same is calculated by the machine control - may be transferred to the grid cleaner control. There are different possibilities for this kind of communication, including a permanent coupling via a physical line, a coupling via a physical interface (such as a plug-and-socket interface, for example if the automatic grid cleaner is not permanently coupled to the thermal cutting machine but may for example used for different thermal cutting machines), a wireless communication, a communication actively initiated by a user (for example by the user uploading a file that contains the cutting plans or information derived therefrom), etc.. Also, it is possible that the machine control and the grid cleaner control are both integrated in a system control, i.e., the machine control and the grid cleaner control need not be physically separate and distinguishable from each other.

The automatic grid cleaner may be configured to evaluate a path of a cleaning tool - such as a brush, for example a rotating brush - to be moved relative to the support grid. This path may be chosen to have a minimal length so that the to-be-cleaned region is cleaned, i.e., the to-be-cleaned region may be cleaned with the shortest possible path for the cleaning tool to be made. An alternative - or additional - criterion may be that the time used is minimized - in many embodiments these optimizations will lead to equivalent results.

The system that is used for carrying out the method may optionally comprise an automatic grid monitoring device - such as a device that includes a camera. Such an automatic grid monitoring device may have either or both of the following functions:
- It may be configured to monitor the grid and to provide additional, auxiliary information on the necessity of a cleaning process. Such additional information may for example be useful for optimizing the path of the cleaning tool by causing the omission of cleaning of regions with a less-than-expected contamination or causing the addition of cleaning of regions that are more heavily contaminated than expected from the cutting plan data.
- It may be configured to check, after a cleaning process, whether the cleaning has been successful, for example by an image processing algorithm and/or intelligence checking whether substantial contamination remains.

In many embodiments, the automatic cleaner is at a location separate from the location where the cutting operation takes place. In these embodiments, the grid needs to be transferred from a processing position - where the cutting operation takes place - to a cleaning position for the cleaning process, and vice versa after the cleaning process. Such transfer may be initiated automatically or manually, by the operator, for example when the operator releases the cleaning process.

If an automatic grid monitoring device is present, it may be arranged to monitor the grid when it is in the processing position or when it is in the cleaning position or both, the latter for example by being physically coupled to the grid to participate in the transfer movements between the processing position and the cleaning position.

In addition to concerning a method, the present invention also concerns an installation for carrying out the method. Such installation comprises a processing means configured to receive the cutting plans, to derive the position dependent degree of contamination therefrom, and to determine a to-be-cleaned region therefrom. It may further comprise an automatic cleaner configured to clean the to-be-cleaned region. To this end, the processing means may further be configured to control the movement and action of a cleaning tool of the automatic cleaner and to optimize a path of the cleaning tool relative to the support grid in the manner mentioned hereinbefore.

The invention also may comprise a thermal cutting system that comprises the installation and in addition comprises a thermal cutting machine. The thermal cutting machine may for example be a laser cutting machine. It is configured to carry out cutting processes in accordance with the cutting plans.

Generally, in the present text, if a device is 'configured' to carry out method steps, this implies that the device is not only suitable to carry out these method steps, but that it comprises the specific means for carrying out the method steps, for example by being programmed to do so.

Moreover, the invention comprises a computer program product comprising instructions which, when the program is executed on a computer, cause the computer to carry out the method described in the present text.

Even more, the invention concerns a computer-readable data carrier having stored thereon this computer program product.

Hereinafter, embodiments of the present invention are described in more detail referring to drawings. In the drawings, same reference numbers refer to same or similar components. They show:
- Fig. 1:: a flatbed laser cutting machine;
- Fig. 2: in part, a support grid;
- Fig. 3: a laser cutting system with a flatbed laser cutting machine (shown only in part) as well as a grid cleaner;
- Fig. 4: a detail of a grid cleaner in a different embodiment;
- Fig. 5: a flowchart of an implementation of a cleaning method;
- Fig 6: a representation of a grid support, with a position dependent degree of contamination caused by a first cutting sequence (left panel), a position dependent degree of contamination caused by a second cutting sequence (middle panel), and with a cumulated position dependent degree of contamination; and
- Fig. 7: a representation of a grid support, with a cumulated position dependent degree of contamination, wherein the effect of a cleaning process is illustrated in three panels (from left to right).

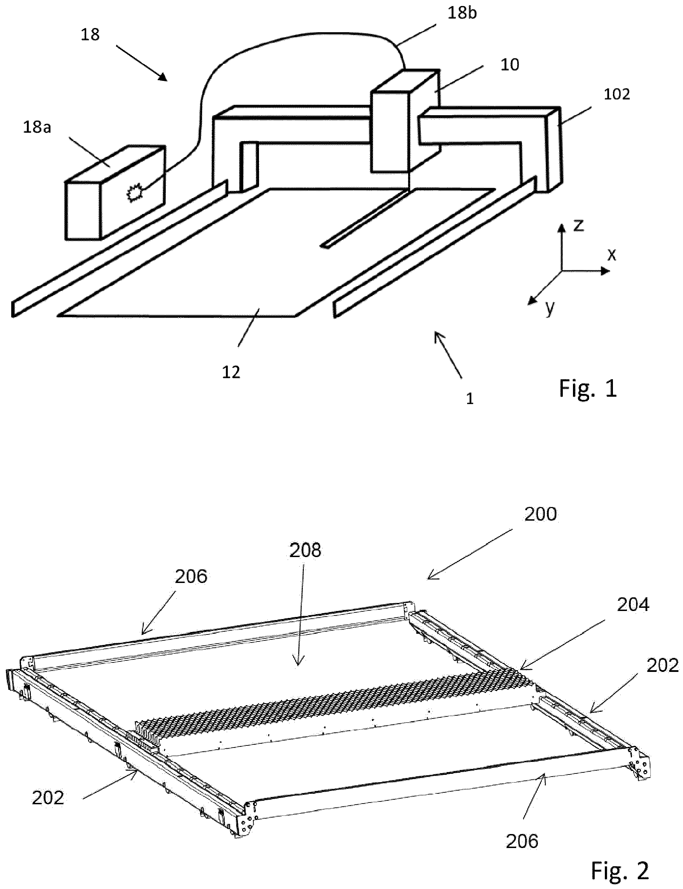

**Figure 1** shows an example of a flatbed laser cutting machine 1. The flatbed laser cutting machine comprises a laser source 18 comprising a laser source module 18a and a transport fiber 18b, a laser cutting head 10, and a laser head moving mechanism. A workpiece 12 is supported by a support grid serving as a workpiece support as described hereinafter. The laser cutting head moving mechanism comprises a bridge 102 relative to which the laser cutting head 10 is movable in x direction und for example also in z direction, and which itself is movable, for example on a pair or rails, in y direction relative to the working table and the workpiece 12. The workpiece 12 may be a metal sheet that is cut by a laser beam emitted by the laser cutting head. The laser beam emitted by the laser cutting head will generally propagate into the downward (-z)-Direction.

The support grid 200 for the workpiece to rest on is shown, in part, in **Figure 2****.** The workpieces support comprises a rectangular frame on which a plurality of grid elements 204 is mounted. Two support members 202 form together with two transverse beams 206 the rectangular frame, which defines a grid space 208. The grid elements 204 are hinged on the support members 202. For ensuring a well-defined arrangement of the grid elements 204, the support members 202 may comprise positioning aids, such as notches arranged at regular distances from each other. In Fig. 2, only a small section of the grid space 208 is depicted to have grid elements 204; in practice for operation the whole grid space 208 or at least a major portion of it will comprise grid elements 204.

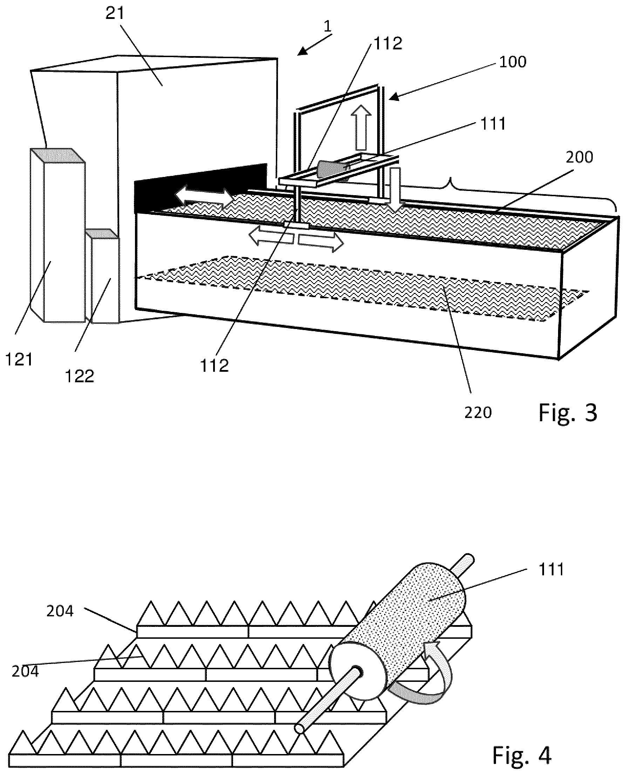

**Figure 3** depicts a flatbed laser cutting system that comprises a flatbed laser cutting machine 1 (only the front part being shown) and in addition a grid cleaner 100. The system has a support grid 200 that can be moved, with a workpiece lying on it, into a working space in an interior of a machine housing 21 that also houses the laser cutting head and the laser cutting head moving mechanism. The flatbed laser cutting system also comprises a machine control 121 for the flatbed laser cutting machine and a grid cleaner control 122 for the grid cleaner 100. The machine control 121 and the grid cleaner control 122 may be physically separate from each other, or they may, at least in part, be integrated with each other. As an option, they may in part be realized by a software running on a general-purpose device, such as an external computer device, etc.

The flatbed laser cutting system in the depicted embodiment also has a further, second support grid 220 so that the (first) support grid 200 and the second support grid 220 can both be used for cutting operations and can be exchanged with each other. Especially, for example, the second support grid 220 can be used for a cutting operation while the first support grid is subject to a cleaning process.

The grid cleaner 100 comprises a cleaning tool 111, which in this example is embodied as a grid cleaning brush, the grid cleaning brush being a rotatable brush carried by a linkage 112 that allows the grid cleaning brush to be lowered unto the grid elements of the support grid and to be moved relative to the support grid while the grid cleaning brush is caused to rotate for the cleaning process.

**Figure 4** shows a detail, illustrating that the rotation axis of the cleaning tool 111(cleaning brush) runs perpendicular to the grid elements 204. It is, however, also possible to arrange the cleaning brush and the grid elements 204 in alternative configurations, for example with the rotation axis parallel to the plane defined by the grid elements 204. Also, in addition or as an alternative to a grid cleaning brush, the grid cleaner may comprise another cleaning tool, such as a brush that moves horizontally relative to the grid elements 204, a dimensionally stiff scratching instrument, etc.

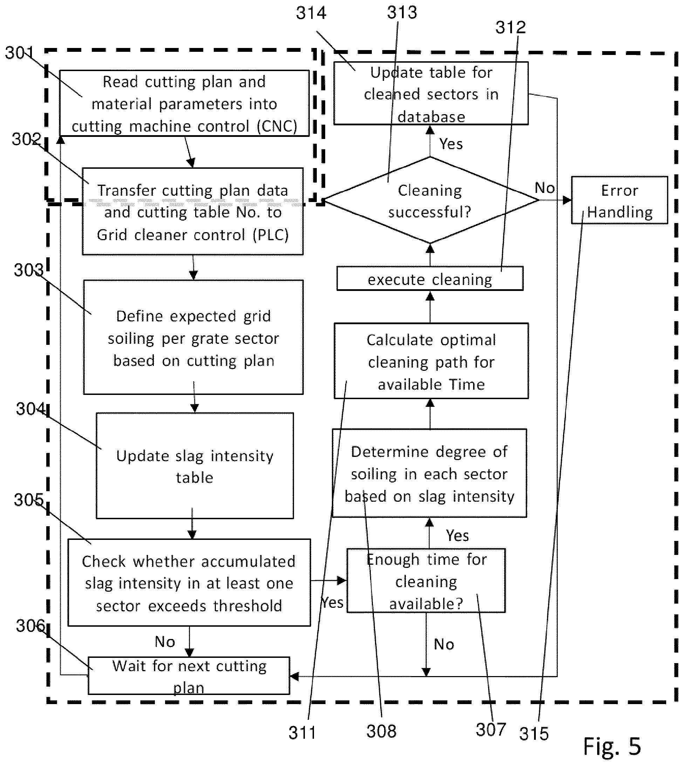

**Figure 5** shows a sequence of method steps. The system may be configured to carry out this sequence, in a fully automated manner or assisted by an operator.

The machine will be configured for a cutting plan of a cutting operation that is carried out into the cutting machine control (CNC). In Fig. 5, this is denoted as a first step (reading step 301). In many embodiments, this reading step will be carried out repeatedly, for any cutting operation. In this, the cutting plan may, in addition to the layout of the cuts and piercings, also comprise information on the workpiece cut, including its material and thickness.

The cutting plan data - for example together with a cutting plan number - will be transferred to the grid cleaner control (PLC; transferring step 302), for example in the form of a cutting table. The grid cleaner control based on this defines (defining step 303) an expected position dependent (for example in the form of a position dependent cutting plan slag intensity value i(x,y), where x, y are coordinates of the position. x and y therein may be continuous values or may be discrete and thereby parametrize sectors on the grid.

Based on the cutting plan slag intensity value i(x,y), the (cumulated) slag intensity value s(x,y), for example in the form of a table with x,y being the parameters representing sectors of the grid, is updated. This updating (updating step 304) may be a simple adding of the cutting plan slag intensity value i(x,y) to the previous slag intensity value s(x,y) to yield the new slag intensity value s(x,y).

Based on the slag intensity value s(x,y), which is an accumulated quantity, it is checked whether a pre-determined criterion is fulfilled. For example, this check (checking step 305) may be a simple comparison with a threshold value T, the criterion being fulfilled if at least one sector (or a different number of sectors, for example at least two, three, four, etc. sectors) has an intensity value above the threshold s(x,y)>T. If the criterion is not fulfilled, no action follows but the system just waits for the next cutting plan (illustrated as waiting step 306) and goes back to the first step. If the criterion is fulfilled, as a next step it is checked whether there is enough time for a cleaning step.

This checking (time checking step 307) may for example be carried out involving an input by an operator who is informed that a cleaning step would be due and can choose whether this step is carried out directly or is postponed. Alternatively, the system can itself make the decision, for example based on a queue of to-be-carried-out cutting operations and/or other criteria.

If the time checking step 307 results in a "no" (if it is determined that not enough time is available), then the system proceeds to the waiting step 306 or directly to the first step (reading step 301).

If the result is "yes", then the grid cleaner 100 proceeds to cleaning. To this end, the degree of soiling is determined in each sector from the slag intensity value s(x,y) (determining step 308). For example, the degree of soiling may correspond to the slag intensity value s(x, y) or may be a quantity derived therefrom. Based on the degree of soiling, cleaning path is defined (calculating step 311). In this calculation in addition to the degree of soling - which for example corresponds to the slag intensity s(x,y) - also the available time may be an input value. It may for example be determined that all sectors with a slag intensity value s(x,y) below a cleaning threshold C (being a value smaller than the threshold value T if applicable) are not cleaned, with the cleaning threshold C being higher if less time is available and being smaller if more time is available. The optimal cleaning path is calculated to be chosen such that, given the dimension of the cleaning tool 111 used, all sectors to be cleaned will be subject to a cleaning step. It may moreover be determined that the cleaning tool will interact longer with sectors having a high slag intensity value s(x,y) that with sectors having a lower slag intensity value, optionally with the cleaning tool not interacting at all with sectors the slag intensity value of which is below the cleaning threshold.

Then in the next step (cleaning step 312), the cleaning is executed, with the cleaning tool 111 (such as the cleaning brush) proceeding along the calculated cleaning path. The method may further comprise a discrimination step 313 where it is checked whether the cleaning was successful. For example, cleaning may be unsuccessful if the system generates an error message. In addition or as an alternative, the system may comprise an automatic grid monitoring device - such as a device that includes a camera - that checks whether the cleaning has been successful. In addition or as an even further alternative, the system asks an operator to input a confirmation that the cleaning was successful.

If cleaning was not successful, the system may go over to an error handling routine (error handling step 315). Such error handling routine in embodiments optionally comprises a repetition of the cleaning step 312 at first. Subsequently, if such repetition was not successful (or if no repetition step was planned and carried out), the error handling routine may comprise outputting an alarm to an operator. Possible error messages outputted therewith may comprise "time out" (which may be due to various reasons, for example if the cleaning tool 111 got stuck because of excessive slag or defective grating); "cleaning task cannot be started" (if a collision control does not produce 'clear track', if the starting point could not be found, if the cleaning tool is not mounted or not properly mounted, etc.); "too high current" (if the grid is defective, in cases of collision with parts or machine parts, etc.)

If cleaning was determined to be successful, the slag intensity value s(x,y) is updated (post-cleaning updating step 314), for example by subtracting cleaning efficiency value e(x,y) from the previous slag intensity value, the cleaning efficiency value e(x,y) for example depending on the intensity of the cleaning operation in the particular sector x,y and/or on the slag intensity value s(x,y) itself. As another example, the updated slag intensity value s(x,y) may be set to 0 or a residual value R>0 for all cleaned sectors, or may be set to a percentage of the previous slag intensity value, which percentage may optionally be cleaning intensity dependent, etc. Thereafter, the system again may proceed to performing the first step.

In the depicted embodiment, the dashed boxes depict the possibility that the first step (reading step 301) is carried out in the cutting machine control CNC, and that the defining step 303 and all subsequent steps are carried out by the grid cleaner control PCL, whereas the transferring step 302 (of course) involves both these entities. This, however, is just an example. It could equally well be the case that the defining step 303 and possibly also subsequent steps are carried out in the cutting machine control and/or a separate entity, with the transferring step 302 accordingly shifted - and/or that at least one of the described steps, possibly even all steps, is/are carried out by a common system control.

In the embodiment shown in Fig. 3, the grid is in a different position for the cleaning step than for cutting operations. The grid can be taken out of the machine housing 21 upon a signal by the machine control and/or by the grid cleaner control. In embodiments, the grid will be pulled out of the housing (automatically or by an operator) after a cutting operation anyway, for removing the cut parts and remaining material and for placing a new workpiece. An initial routine that may for example comprise manual inspection of the grid may be carried out upon each removal, for example in parallel to the steps with reference numbers 302-306.

As a variant, in the determining step 308 instead of just using the calculated slag intensity value s(x,y), the system may accept additional input, for example from a grid monitoring device, for example comprising a camera, and determine a degree of soiling that is calculated from both, the slag intensity value and in addition from a status determined by the grid monitoring device.

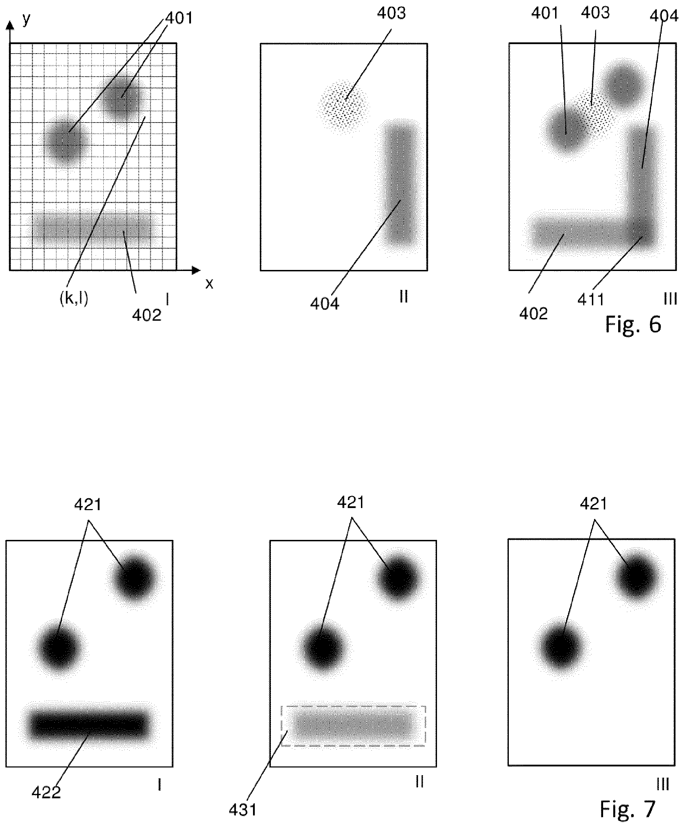

The first panel I of **Figure 6** depicts - very schematically - an example of a cutting plan slag intensity assigned to a cutting plan. The a cutting plan slag intensity values i(x,y) are represented by shadings in Fig. 6, with the intensity value the higher the darker the shading. The particular cutting plan applied results in two dot shaped soiled areas 401 and a stripe shaped soiled area 402, for example from two small features and an elongate feature cut out from a workpiece.

In the first panel I of Fig. 6, schematically, the whole area of the support grid is divided into sectors (k,l), whereby the coordinates x and y parametrizing the support grid area are discrete parameters x=1....n and y=1... m and the cutting plan slag intensity values i(x,y) - as well as the slag intensity values s(x,y) - can be represented by values in a table. The representation of the sectors in Fig. 6 is just schematic. In practice, the division into the sectors may be much finer so that also finer structures (see for example panel II of Fig. 6) may be considered. It is also possible to provide the cutting plan slag intensity values as well as the (cumulated) slag intensity values in a continuous manner, for example using interpolation between table values. In panels II and III of Fig. 6 as well as in Fig. 7, the sectors are not shown.

In the second panel II of Fig. 6, a further example of a cutting plan slag intensity is shown, with a first area 403 of small-size soiling spots and second, strip-shaped soiled area 404.

If the cutting plans to which the first and second panels of Fig. 6 are assigned are carried out one after the other, the (cumulated) slag intensity values will be the sum of the cutting plan slag intensity values of these cutting plans. Fig. 6 accordingly depicts the slag intensity distribution after the cutting operations with the two cutting plans in panel III. The slag intensity values s(x,y) - again represented by shadings - correspond to the sum of the cutting plan slag intensity values. In an overlap region 411 the cumulated slag intensity is particularly high.

**Figure 7** - again very schematically - shows in the first panel I a slag intensity that for example has resulted after a plurality of cutting operations, with two dot shaped heavily soiled areas 421 and a stripe shaped heavily soiled area 422. The slag intensity distribution of the first panel of Fig. 7 may for example result if the cutting plan attributed to the first panel of Fig. 6 has been used several times in a row.

When - based on the criteria explained hereinbefore - a to-be-cleaned region 431 is cleaned, then the according slag intensity values will be reduced or set to zero, as illustrated in the second panel II and the third panel III of Fig. 7.

As an alternative to being set to zero, as shown in panel III of Fig. 7, the slag intensity values could also be just reduced, for example to a value determined based on experience about the efficiency of the cleaning process.

## Claims

1. A method for the purpose of cleaning of a support grid (200, 220) of a thermal cutting machine (1), the method comprising the steps of:
• Using cutting plans to determine a position dependent degree of contamination, wherein the cutting plans are cutting plans representing a layout of cuts produced in the course of cutting operations carried out by the thermal cutting machine and stored in a memory of the thermal cutting machine;
• wherein in the step of using cutting plans to determine the position dependent degree of contamination, the degree of contamination per position on the support grid is calculated based on the cutting operations that took place at the respective position; and
• dependent on a predetermined criterion, defining a to-be-cleaned region of the support grid (200, 220) from the position dependent degree of contamination.

2. The method according to claim 1, comprising the step of obtaining, for each one of the cutting plans, a cutting plan slag intensity value i(x,y) representing an intensity of slag caused by a cutting operation carried out based on the respective cutting plan, wherein the position dependent degree of contamination in the step of using cutting plans to determine the position dependent degree of contamination is represented as a position dependent slag intensity value s(x,y), and wherein the slag intensity value for a certain position is obtained by summing up the cutting plan slag intensity values i(x,y) from each of the cutting plans for that position.

3. The method according to any one of the previous claims, wherein the predetermined criterion comprises a comparison of the position dependent degree of contamination with a threshold value (T).

4. The method according to any one of the previous claims, comprising the further step of:
• carrying out a cleaning process, the cleaning process being carried out only in the to-be-cleaned region (431) or being carried out more intensively in the to-be-cleaned region (431) than in other regions.

5. The method according to claim 5, wherein the cleaning process is carried out by an automatic grid cleaner (100).

6. The method according to claim 6, wherein the automatic grid cleaner (100) comprises a cleaning tool (111).

7. The method according to claim 5 or 6, wherein the automatic grid cleaner (100) comprises a grid cleaner control (122), and wherein the method comprises the step of transmitting from a machine control (121) to the grid cleaner control (122) at least one of: the cutting plans, cutting plan slag intensities derived from the cutting plans; a position dependent slag intensity value derived from the cutting plan slag intensities.

8. An installation for carrying out a method for the purpose of cleaning a support grid (200, 220) of a thermal cutting machine (1), the installation comprising a processing means configured to receive the cutting plans, to derive the position dependent degree of contamination therefrom, and to determine the to-be-cleaned region therefrom, the installation being programmed and configured to carry out the method according to any one of the previous claims.

9. The installation according to claim 8, further comprising an automatic grid cleaner (100) configured to carry out a cleaning process, the cleaning process being carried out only in the to-be-cleaned region (431) or being carried out more intensively in the to-be-cleaned region (431) than in other regions.

10. A thermal cutting system, comprising an installation according to claim 8 or 9 and further comprising a thermal cutting machine (1), the thermal cutting machine (1) being configured to carry out cutting processes in accordance with the cutting plans.

11. A computer program product comprising instructions which, when the program is executed on a computer, cause the computer to carry out the method according to any one of claims 1-3.

12. A computer-readable data carrier having stored thereon the computer program product according to claim 11.
